# EUROPÄISCHE PATENTSCHRIFT

(11) **EP 0 856 690 B1**
(45) Veröffentlichungstag und Bekanntmachung des Hinweises auf die Patenterteilung: **05.03.2003**
(21) Anmeldenummer: 97122133.8
(22) Anmeldetag: 16.12.1997
(51) Int. Cl.: F16K 11/07, F16K 27/04

(54) **Drei- oder Vier-Wegeventil**
Three or four way valve
Soupape à trois ou quatres voies

(30) Priorität: 19.12.1996 DE 19653084; 18.03.1997 DE 19711085
(43) Veröffentlichungstag der Anmeldung: 05.08.1998
(73) Patentinhaber: WILO AG, 44263 Dortmund (DE)
(72) Erfinder: Strelow, Günter, 44801 Bochum (DE)
(74) Vertreter: COHAUSZ DAWIDOWICZ HANNIG & PARTNER

(56) Entgegenhaltungen:
- DE-A- 1 500 064
- DE-A- 2 547 847
- DE-A- 19 629 217
- DE-U- 9 106 236
- US-A- 3 817 269
- US-A- 3 976 103
- US-A- 4 574 841

## Beschreibung

Die Erfindung betrifft ein Drei- oder Vierwegeventil nach dem Oberbegriff des Anspruch 1 Beispielsweise aus DE 1500064 ist es bekannt, Drei- oder Vier-Wegeventile über Leitungen innerhalb von Anlagen an Vorrichtungen anzuschließen wie es z.B. bei Heizungsanlagen der Fall ist. Die Montage des Ventils einschließlich des Antriebs zwischen den Leitungen erfordert einen erheblichen Arbeitsaufwand und verhältnismäßig viel Platz.

Zudem ist es bekannt, Mehrwegventile in einem flachen Gehäuse unterzubringen, das in einer ersten Stirnseite Öffnungen für den Anschluß der Hauptleitungen aufweist und in seiner anderen parallelen Stirnseite Öffnungen zum Anschluß einer Kreiselpumpe mit stirnseitigem Einlaß und Auslaß hat. die Verstellmechanik für die Schließteile ist innerhalb des Gehäuses untergebracht. Nachteilig an einem derartigen Mehrwegeventil ist, daß die Ventilmechanik von aufwendiger Konstruktion ist, da im Gehäuse nur geringer Bauraum zur Verfügung steht.

Aufgabe der Erfindung ist es, ein Ventil der eingangs genannten Art so zu verbessern, daß bei einfacher Konstruktion und Fertigung eine leichte Montage und eine hohe Flexibilität ermöglicht wird.

Diese Aufgabe wird erfindungsgemäß durch ein Ventil nach Anspruch 1 gelöst.

Eine solche Konstruktion erfordert eine besonders einfache Montage, da das Ventil nur an eine Anschlußfläche befestigt werden muß, um danach sofort alle erforderlichen Anschlüsse zu haben. Anschlußleitungen sind nicht mehr erforderlich.

Ferner werden die verschiedensten Ventilarten und Ventilfunktionen als auch die verschiedensten Einsatzmöglichkeiten ermöglicht. Es besteht eine hohe Flexibilität bei einfacher Konstruktion und Fertigung. Auch sind geringe Außenabmessungen und eine hohe Zuverlässigkeit gegeben.

Eine hohe Flexibilität bei einfacher Konstruktion ist dann gegeben, wenn die Wege insbesondere Kanäle im Gehäuseinneren, von einem separatem Einsatz gebildet sind, der innerhalb der Außenwände des Gehäuses liegt. Es braucht nur der Einsatz ausgewechselt zu werden, um unterschiedliche Ventilarten zu erhalten.

Besonders vorteilhaft ist es, wenn von der ebenen Anschlußfläche zum Antrieb eine hydraulische oder pneumatische Steuerleitung durch das Gehäuse läuft. Auch ist es von Vorteil, wenn das Gehäuseäußere rotationssymmetrisch zu einer Achse ist, die eine Normale zur Anschlußfläche bildet.

Hierbei kann das Gehäuseäußere mindestens eine Abstufung aufweisen.

Ferner wird vorgeschlagen, daß am äußeren Rand der Anschlußfläche ein Flansch oder einzelne Vorsprünge zum Befestigen an der Anschlußvorrichtung sind.

Besonders vorteilhaft ist es, wenn mindesten ein Kanal im Gehäuseinneren einen ringförmigen oder ringabschnittförmigen Querschnitt aufweist. Ferner ist vorteilhaft, wenn mindestens ein Kanal im Gehäuseinneren koaxial zur Gehäuseachse angeordnet ist.

Vorzugsweise wird vorgeschlagen, daß das Gehäuse und/oder der Einsatz aus Kunststoff bestehen.

Ausführungsbeispiel der Erfindung sind in der Zeichnung dargestellt und werden im folgenden näher beschrieben.

### Es zeigen:

- Figur 1: einen Längsschnitt durch ein erstes Ausführungsbeispiel des Ventils
- Figur 2: die Anschlußfläche des ersten Ausführungsbeispiels
- Figur 3: einen Längsschnitt durch ein zweites Ausführungsbeispiel
- Figur 4: die Anschlußfläche des zweiten Ausführungsbeispiels
- Figur 5: ein drittes Ausführungsbeispiel und
- Figur 6: die Anschlußfläche des dritten Ausführungsbeispiels.

Das Drei- oder Vier-Wegeventil weist ein Gehäuse 1 auf, das rotationssymmetrich zur Gehäuseachse 2 ist und dessen insbesondere koaxiale Außenwand 3 stufenförmig geformt sein kann. an einer Stirnseite des Gehäuses 1 ist ein Antrieb 4 befestigt der elektrisch, hydraulisch oder pneumatisch über eine koaxiale Stange 5 ein Ventilstellglied 6 betätigt.

Das Ventilstellglied 6 arbeitet mit Ventilsitzen 7a, 7b zusammen, die von der Gehäuseaußenwand 3 und/oder von eine koaxialen Einsatz 8 gebildet werden, der von der dem Antrieb 4 gegenüberliegenden Stirnseite des Gehäuses 1 einsteckbar ist und insbesondere klemmend gehalten wird.

Die dem Antrieb 4 gegenüberliegende Stirnseite des Gehäuses 1 bildet eine ebene Anschlußfläche 9 mit Einlaßöffnungen 10a und 10b und mindestens einer Auslaßöffnung 11. Die Einlaßöffnungen 10a und 10b werden durch den teilringförmigen Zwischenraum zwischen der Innenwand und der Außenwand 3 des Einsatzes 8 gebildet. Die Auslaßöffnung 11 wird vom äußeren Ende des Inneren des Einsatzes 8 gebildet.

Der äußere Rand der Außenwand 3 als auch der äußere Rand des Einsatzes 9 liegen in der ebenen Anschlußfläche 9, auf der die Achse 2 als Normale steht. In dieser Anschlußfläche liegen auch alles Ein- und Auslaßöffnungen, so daß das Ventil mit dieser Anschlußfläche 9 an der ebenen Fläche einer Anschlußvorrichtung wie z.B. an der Außenfläche eines Heizkessels befestigbar ist, wobei die Anschlußvorrichtung entsprechende Ein- und Auslaßöffnungen besitzt., die mit den Öffnungen des Ventils übereinstimmen insbesondere fluchten.

Der Einsatz 8 bildet somit einen inneren Kanal 13, der zur Auslaßöffnung 11 führt und äußere Kanäle 14 die in die Einlaßöffnungen 10a und 10b führen.

Zum Befestigen des Ventils an der Anschlußvorrichtung insbesondere an einem Heizkessel oder an einem Zwischenteil (Interface) kann der äußere Rand der Anschlußfläche 9 nach außen vorragende Vorsprünge oder einen Flansch aufweisen. Das Gehäuse 1 und der Einsatz 8 bestehen vorzugsweise aus Kunststoff.

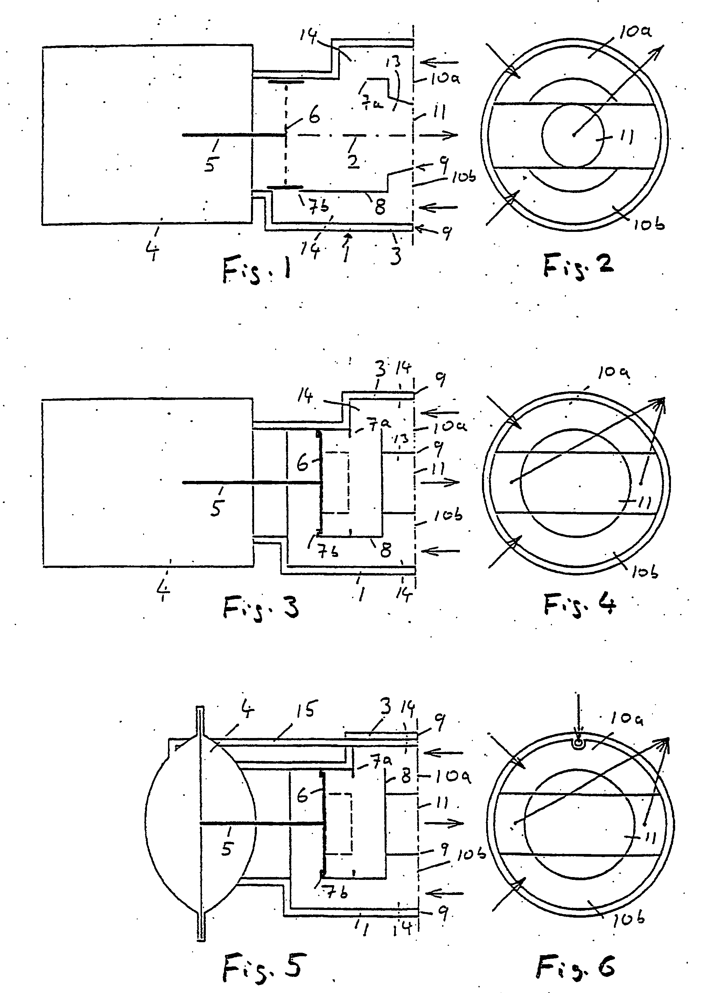

Das Ausführungsbeispiel nach Figur 3 und 4 unterscheidet sich von dem nach Figur 1 und 2 im wesentlichen dadurch, daß der Einsatz, das Ventilstellglied und die Ventilsitze anders geformt sind, um hierdurch insbesondere eine andere Funktion des Ventils zu erhalten.

Das Ausführungsbeispiel nach Figur 5 und 6 unterscheidet sich von dem nach Figur 3 und 4 dadurch, daß das Ventilstellglied 6 durch einen hydraulischen Antrieb verstellbar ist, während die Antriebe der zwei anderen Ausführungsbeispiele vorzugsweise elektrisch insbesondere magnetisch sind. Im Ausführungsbeispiel nach Figur 5 und 6 ist durch das Gehäuse 1 eine Steuerleitung 15 geführt, die den hydraulischen Druck von der Anschlußfläche 9 an der Anschlußvorrichtung bzw. von der Fläche des Kessels oder von einer Zwischeneinrichtung versorgt.

## Patentansprüche

1. Drei- oder Vier-Wegeventil mit einem im Ventilgehäuse (1) geführten Verstellglied (6), das durch einen elektronischen, hydraulischen oder pneumatischen Antrieb (4) betätigbar ist, der am Gehäuse (1) befestigt ist, wobei das Gehäuse (1) auf der dem Anstrieb (4) gegenüberliegenden Seite eine ebene Anschlußfläche (9) bildet, **dadurch gekennzeichnet, daß** sich in der Anschlußfläche (9) alle Ein- und Auslaßöffnungen des Ventils befinden und mit der das Gehäuse (1) an der ebenen Fläche einer Anschlußvorrichtung befestigbar ist, wobei die Fläche der Anschlußvorrichtung mit den Ein- und Auslaßöffnungen übereinstimmende Öffnungen aufweist.

2. Ventil nach Anspruch 1, **dadurch gekennzeichnet, daß** die Wege, insbesondere Kanäle (13, 14) im Gehäuseinneren, von einem separatem Einsatz (8) gebildet sind, der innerhalb der Außenwände des Gehäuses (1) liegt.

3. Ventil nach Anspruch 1 oder 2, **dadurch gekennzeichnet, daß** von der ebenen Anschlußfläche (9) zum Antrieb (4) eine hydraulische oder pneumatische Steuerleitung (15) durch das Gehäuse (1) läuft.

4. Ventil nach einem der vorherigen Ansprüche, **dadurch gekennzeichnet, daß** das Gehäuseäußere rotationssymmetrisch zu einer Achse (2) ist, die eine Normale zur Anschlußfläche (9) bildet.

5. Ventil nach Anspruch 4, **dadurch gekennzeichnet, daß** das Gehäuseäußere mindestens eine Abstufung aufweist.

6. Ventil nach einem der vorherigen Ansprüche, **dadurch gekennzeichnet, daß** am äußeren Rand der Anschlußfläche (9) ein Flansch oder einzelne Vorsprünge zum Befestigen an der Anschlußvorrichtung sind.

7. Ventil nach einem der vorherigen Ansprüche, **dadurch gekennzeichnet, daß** das Gehäuse (1) aus Kunststoff besteht.

8. Ventil nach einem der vorherigen Ansprüche, **dadurch gekennzeichnet, daß** mindestens ein Kanal (14) im Gehäuseinneren einen ringförmigen oder ringabschnittförmigen Querschnitt aufweist.

9. Ventil nach einem der vorherigen Ansprüche, **dadurch gekennzeichnet, daß** mindestens ein Kanal (13, 14) im Gehäuseinneren koaxial zur Gehäuseachse (2) angeordnet ist.

10. Ventil nach einem der Ansprüche 2 bis 9, **dadurch gekennzeichnet, daß** der Einsatz (8) aus Kunststoff besteht.

## Claims

1. Three- or four-way directional control valve having an adjusting member (6) guided in a valve housing (1), the adjusting member (6) being actuatable by an electronic, hydraulic or pneumatic drive (4) attached to the housing (1), the housing (1) forming an planar connection surface (9) on the side opposite to the drive (4), **characterized in that** the connection surface (9) incorporates all inlet and outlet openings of the valve and is suitable for the fastening of the housing (1) to the planar surface of a connection device, the surface of the connection device having openings matching the inlet and outlet openings.

2. Valve according to claim 1 **characterized in that** the ways, in particular passages (13, 14) inside the housing, are formed by a separate insert (8) arranged inside the outer walls of the housing (1).

3. Valve according to claim 1 or 2 **characterized in that** a hydraulic or pneumatic control line (15) is provided through the housing (1) from the planar connection surface (9) to the drive (4).

4. Valve according to any one of the preceding claims, **characterized in that** the outside of the housing is rotationally symmetrical around an axis (2) that is perpendicular to the connection surface (9).

5. Valve according to claim 4, **characterized in that** the outside of the housing has at least one step.

6. Valve according to any one of the preceding claims, **characterized in that** the outer edge of the connection surface (9) has a flange or individual projections suitable for the fastening to the connection device.

7. Valve according to any one of the preceding claims, **characterized in that** the housing (1) is made of a plastic material.

8. Valve according to any one of the preceding claims, **characterized in that** at least one passage (14) inside the housing has a cross section that is annular or has an annular portion.

9. Valve according to any one of the preceding claims, **characterized in that** at least one passage (13,14) inside the housing is arranged coaxially to the housing axis (2).

10. Valve according to one of claims 2 to 9, **characterized in that** the insert (8) is made of a plastic material.

## Revendications

1. Une soupape à trois ou quatre voies présentant un élément (6) de commande, qui est guidé dans un corps (1) de soupape et qui peut être actionné par un entraînement (4) électrique, hydraulique ou pneumatique, lequel est fixé sur le corps (1), cependant que le corps (1) forme une face (9) de raccordement plane sur la face disposée vis-à-vis de l'entraînement (4), **caractérisée en ce que** la face (9) de raccordement contient toutes les ouvertures d'entrée et de sortie de la soupape et permet de fixer le corps (1) sur la surface plane d'un dispositif de raccordement, cependant que la surface du dispositif de raccordement présente des ouvertures, qui concordent avec les ouvertures d'entrée et de sortie.

2. Une soupape conforme à la revendication n° 1, **caractérisée en ce que** les conduites, en particulier les canaux (13, 14) à l'intérieur du corps, sont constituées par une cartouche (8) distincte, qui est disposée dans l'enceinte des parois extérieures du corps (1).

3. Une soupape conforme à la revendication n° 1 ou n°2, **caractérisée en ce qu**'une conduite (15) de commande hydraulique ou pneumatique va de la face (9) de raccordement plane jusqu'à l'entraînement (4) en traversant le corps (1).

4. Une soupape conforme à une des revendications précédentes, **caractérisée en ce que** l'extérieur du corps est symétrique pour la rotation autour d'un axe (2), qui est perpendiculaire à la face (9) de raccordement.

5. Une soupape conforme à la revendication n° 4, **caractérisée en ce que** l'extérieur du corps (1) présente au moins un échelonnement.

6. Une soupape conforme à une des revendications précédentes, **caractérisée en ce que** la bordure extérieure de la face (9) de raccordement présente une bride ou des épaulements individuels pour la fixation au dispositif de raccordement.

7. Une soupape conforme à une des revendications précédentes, **caractérisée en ce que** le corps (1) est constitué de matière synthétique.

8. Une soupape conforme à une des revendications précédentes, **caractérisée en ce que** au moins un canal(14) à l'intérieur du corps présente une section annulaire ou en forme de segment d'anneau.

9. Une soupape conforme à une des revendications précédentes, **caractérisée en ce que** au moins un canal (13, 14) à l'intérieur du corps est disposé de façon à être coaxial avec l'axe (2) du corps.

10. Une soupape conforme à une des revendications n° 2 à n° 9, **caractérisée en ce que** la cartouche (8) est constituée de matière synthétique.
